(19) Europäisches Patentamt / European Patent Office / Office européen des brevets

(11) **EP 1 369 186 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(51) Int Cl.:
*B21B 37/28* (2006.01)  *G01L 5/04* (2006.01)
*G01N 3/08* (2006.01)  *B21B 38/02* (2006.01)

(21) Anmeldenummer: **03007840.6**

(22) Anmeldetag: **05.04.2003**

(54) **Verfahren und Vorrichtung zur Planheitsmessung von Bändern**

Method and device for measuring evenness in webs

Procédé et dispositif de mesure de la planéité d'une bande

(84) Benannte Vertragsstaaten:
**AT BE BG CH CY CZ DE DK EE ES FI FR GB GR HU IE IT LI LU MC NL PT RO SE SI SK TR**

(30) Priorität: **04.06.2002 DE 10224938**

(43) Veröffentlichungstag der Anmeldung:
**10.12.2003 Patentblatt 2003/50**

(73) Patentinhaber: **BWG BERGWERK- UND WALZWERK-MASCHINENBAU GMBH D-47051 Duisburg (DE)**

(72) Erfinder:
• **Noé, Andreas**
  **47647 Kerken (DE)**
• **Noé, Rolf**
  **45478 Mühlheim (DE)**

(74) Vertreter: **Lorenz, Bernd Ingo Thaddeus et al Andrejewski - Honke Patent -und Rechtsanwälte Postfach 10 02 54 45002 Essen (DE)**

(56) Entgegenhaltungen:
DE-A- 3 701 267    DE-B- 1 264 100
US-A- 4 445 349

• MUECKE G ET AL: "FORMABWEICHUNGEN IN BAENDERN: EINTEILUNG, ENTSTEHUNG, MESSUNG UND BESEITIGUNG SOWIE QUANTITATIVE BEWERTUNGSMETHODEN SHAPE DEVIATIONS IN STRIPS: CLASSIFICATION, DEVELOPMENT, MEASURING AND ELIMINATION AS WELL AS METHOD OF QUANTITATIVE ASSESSMENT" STAHL UND EISEN, VERLAG STAHLEISEN GMBH. DUSSELDORF, DE, Bd. 122, Nr. 2, 15. Februar 2002 (2002-02-15), Seiten 33-39, XP001114862 ISSN: 0340-4803

**Beschreibung**

Die Erfindung betrifft eine Messrolle zur Planheitsmessung von Bändern, insbesondere von Metallbändern beim Durchlaufen von Walzwerken oder Bandprozesslinien. Mit einer solchen Messrolle werden aus auf das Band einwirkenden Zugkräften wenigstens sektionsweise Zugspannungen über die Bandbreite ermittelt.

Metallische Bänder weisen nach Umformprozessen unter Umständen Planheitsfehler auf, die sich auf Längenunterschiede einzelner Bandstreifen über der Bandbreite zurückführen lassen. Zu solchen Umformprozessen, die üblicherweise in Walzwerken oder Bandprozesslinien vorgenommen werden, gehören das Walzen oder Richten. Auch das Glühen kann zu Unplanheiten führen.

Insbesondere bei Kaltwalzprozessen beobachtet man häufig eine gewisse Welligkeit der Bänder, die dadurch entsteht, dass in Bandlängsrichtung über der Banddicke wechselnde plastische Streckungen auftreten. Neben solchen Abweichungen von der Ebenheit existieren darüber hinaus als Formabweichungen Variationen der Geradheit, z. B. Bandsäbel.

Planheitsmessungen werden im Stand der Technik üblicherweise so durchgeführt, dass das Band Zugkräften ausgesetzt wird, welche - durch die Bandbreite und Banddicke dividiert - unmittelbar Rückschlüsse auf die Zugspannung erlauben.

Bandwelligkeiten stellen bei der Weiterverarbeitung von insbesondere Metallbändern auf dem Automobilsektor dann Probleme dar, wenn die Unebenheit gewisse Grenzen überschreitet. Als Maß für Abweichungen von der Planheit dient die sogenannte I-Unit IU, wobei ein IU zu einem Zugspannungsunterschied von $10^{-5}$ korrespondiert. D. h., dass ein einzelner Bandstreifen eine zugehörige Längenabweichungen ($\Delta$ I/I) von $< 10^{-5}$ aufweisen darf, um für die Unebenheit den Wert von 1 IU angeben zu können.

Da die Hersteller von Bandmaterial in der Regel die vorgenannten Ebenheitsgrenzwerte nachweisen müssen, werden Planheitsfehler ermittelt und hierzu gehörige Planheitsmessungen zumeist innerhalb eines Walzwerkes oder einer Bandprozesslinie vorgenommen. Entsprechende Messungen können auch parallel zur Optimierung eines Umformprozesses eingesetzt werden.

Im Stand der Technik existieren sowohl berührungslose Verfahren zur Planheitsmessung (EP 1 116 952 A2) als auch solche, die mit Hilfe von Messrollen in Kontakt mit dem durchlaufenden Band die Zugspannung ermitteln (vgl. nur beispielhaft die DE 199 18 699 A1).

Während bei den berührungslosen Messverfahren zumeist mit Hilfe von Schallwellen, Ultraschallwellen sowie auf elektromagnetischem Wege die Planheit erfasst wird, greifen die letztgenannten Verfahren auf mechanische Messvorgänge zurück und weisen die größte Verbreitung in der Praxis auf.

So verfügt die Messrolle nach der DE 199 18 699 A1 über eine Vielzahl von Messgebern, die in Ausnehmungen mit Abstand zur Wandung der Messrolle angeordnet sind. Daneben ist es auch bekannt, die Messrolle gleichsam in sogenannte Scheibensegmente zu unterteilen, wie dies im Rahmen der EP 1 182 424 A1 beschrieben wird.

In beiden Fällen werden mit Hilfe der Sensoren radiale Kraftmessungen im Bereich der Bandumschlingung vorgenommen. Auf diese Weise kann aus der solchermaßen ermittelten Teilzugkraft auf die örtliche Zugspannung rückgeschlossen werden, indem die Teilzugkraft durch die Streifenbreite und die Banddicke dividiert wird.

Je nach örtlichen Planheitsfehlern aufgrund von Längenunterschieden stellen sich wechselnde Teilzugkräfte am zugehörigen Sensor ein, die zu ebenfalls variierenden Zugspannungen korrespondieren, welche ein Maß für die Dehnungsunterschiede im Metallband und damit dessen Planheit darstellen. Das ist grundsätzlich bekannt und wird ausführlich in dem Aufsatz "Formabweichungen in Bändern: Einteilung, Entstehung, Messung und Beseitigung sowie quantitative Bewertungsmethoden" von Gert Mücke, Kai F. Karhausen und Paul-Dieter Pütz beschrieben (Stahl und Eisen 122 (2002) Nr. 2, Seite 33 ff.).

Die bekannten mechanischen Messmethoden sind mit dem grundsätzlichen Nachteil behaftet, dass man lediglich eine begrenzte Anzahl von Messpunkten über die Bandbreite mit örtlichen Zugspannungswerten erhält. D. h. eine hinreichend genaue Auflösung erfordert eine große Zahl von Sensoren, was sowohl die Messrolle verteuert als auch den Aufwand bei der Auswertung erhöht. Hinzu kommt, dass Messungen an der Bandkante problematisch sind. Denn hier ist es möglich, dass ein zugehöriger Sensor nur teilweise vom Band bedeckt bzw. umschlungen wird. Daraus können Fehler resultieren. Das gilt auch dann, wenn die Lage der Bandkante ebenfalls gemessen wird.

Aus der DE 1 264 100 kennt man im Übrigen eine Anordnung für die Messung der Verteilung des Bandzuges über die Bandbreite mit einer Umlenkwalze, wobei die Umlenkwalze eine druckempfindliche Zone aufweist, die schraubenförmig im Verhältnis zur Längsrichtung der Umlenkwalze verläuft. Dazu ist eine Nut vorgesehen, in welche mehrere Messwertgeber eingesetzt sind.

Schließlich beschreibt die US 4 445 349 eine Messrolle mit einem hydraulisch aufblähbaren Messbereich im Rahmen eines schraubenwendelförmig verlaufenden Kanals zur Aufnahme von einem hydraulischen und unter Druck zuführbaren Medium.

Der Erfindung liegt das technische Problem zugrunde, eine Messrolle zur Planheitsmessung von Bändern der eingangs beschriebenen Gestaltung so weiter zu entwickeln, dass mit einfachem Aufwand die Zugspannungsverteilung feinauflösend über die Bandbreite ermittelt werden kann und insbesondere Fehler im Bandkantenbereich vermieden werden.

Diese Aufgabe wird gelöst durch eine Messrolle mit den Merkmalen des Anspruchs 1. Damit lässt sich ein Verfahren zur Planheitsmessung von Bändern durchführen, welches dadurch gekennzeichnet ist, dass die Zugkräfte über die Bandbreite sukzessive gemessen und gegebenenfalls aufsummiert werden, und dass aus der solchermaßen gewonnenen Summenkraftfunktion über die Bandbreite eine durchgängige bzw. kontinuierliche Zugspannungsverteilungsfunktion abgeleitet wird. In der Regel werden also die jeweiligen Zugkräfte addiert, was jedoch nicht zwingend ist. Kommt es zu keiner Summenbildung, so entspricht die Summenkraftfunktion letztlich dem Verlauf der jeweils gemessenen Zugkräfte über die Bandbreite, aus welchem sich die Zugspannungsverteilungsfunktion herleiten lässt.

Es werden also die Zugkräfte, bzw. wenn man so will infinitesimale Teilzugkräfte, in den einzelnen Bandstreifen von einer Bandkante ausgehend sukzessiv oder kontinuierlich in Bandbreitenrichtung als integrale Summenkraft gemessen. Dabei kommt ein mit dem Band in Kontakt befindlicher Sensor in Form eines Messbalkens zum Einsatz, welcher die auf das Band einwirkenden Zugkräfte erfasst.

Dabei misst der Sensor die Zugkräfte über die Bandbreite mit jeweils zeitlichem Versatz und ermittelt auf diese Weise die Zugkräfte von Bandkante zu Bandkante, und zwar entlang einer vorgegebenen Messlinie oder Messfläche, wobei die entlang der Messlinie bzw. Messfläche erfasste Zugwerte aufsummiert werden.

Während der Planheitsmessung schließen ein Anfangs- und Endpunkt bzw. Anfangs- und Endbereich des Sensors - bezogen auf seinen Querschnitt - mit dem Mittelpunkt der Messrolle bzw. des Sensors einen innerhalb eines Umschlingungswinkels liegenden Messwinkel ein. Anders ausgedrückt, liegen der Anfangs- und Endpunkt bzw. Anfangs- und Endbereich der Messlinie bzw. des Sensors in Projektion auf den Querschnitt der Messrolle innerhalb des Umschlingungswinkels des Bandes bzw. Metallbandes um die Messrolle herum.

Der vom Sensor erfasste Messbereich kann in mehrere Teilmessbereiche unterteilt werden, deren einzelne gemessene Zugkräfte zur Summenkraftfunktion vereinigt werden. Das erfolgt zumeist in einer ohnehin vorhandenen Rechnereinheit.

Daneben ist es auch möglich, über die Bandbreite gleitende Mittelwerte zugehöriger (Teil)Zugkräfte in einzelnen Bandstreifen zu ermitteln und hieraus die Zugspannungsverteilung abzuleiten. Das wird mit Bezug zur Figurenbeschreibung noch näher erläutert werden.

Im Ergebnis zeichnet sich die Erfindungslehre dadurch aus, dass im einfachsten Fall mit Hilfe eines einzigen Sensors die Zugkräfte über die Bandbreite sukzessive gemessen und aufsummiert werden. Das gelingt, weil es sich bei dem Sensor um einen gegenüber der Bandlaufrichtung schräggestellten Messbalken handelt. Durch die Schrägstellung gegenüber der Bandlaufrichtung werden die auf das Band einwirkenden Zugkräfte bzw. Teilzugkräfte in jedem einzelnen Bandstreifen mit jeweils zeitlichem Versatz erfasst, und zwar von Bandkante zu Bandkante entlang der Messlinie.

Da der Sensor (Messbalken) zunehmend innerhalb des Umschlingungswinkels liegt, steigt die von einem in die Messrolle integrierten Messbalken erfasste Zugkraft sukzessive in Bandbreitenrichtung als integrale Summenkraft an. Bei einem exakt planen Band ergibt sich ein linearer Anstieg der Zugkraft über die Bandbreite. Das ist bei einem unplanen Band nicht der Fall.

Selbstverständlich fällt diese gemessene Summenkraft nach Erreichen eines Plateaus oder Maximums (wenn der Sensor bzw. Messbalken vollständig von der Zugkraft erfasst wird) wieder ab. Denn bei fortlaufendem Band dreht sich die Messrolle aus dem Umschlingungswinkel wieder heraus. Idealerweise sind dabei ansteigende und abfallende Flanken jeweils gleich mit unterschiedlicher Steigung ausgebildet.

Aus diesem Grund schlägt die Erfindung vor, die Zugspannungsverteilungsfunktion bevorzugt aus der Ableitung der Summenkraftfunktion nach der Bandbreite zu ermitteln. Auf diese Weise lassen sich Abweichungen der Summenkraftfunktion von der Linearität ohne weiteres erfassen. Wenn nun noch diese Ableitung der Summenkraftfunktion nach der Bandbreite durch die Banddicke dividiert wird, so erhält man unmittelbar die Zugspannungsverteilung im Band in Abhängigkeit von der Bandbreite.

Das Messverfahren kommt also im Idealfall mit einem einzigen Sensor (Messbalken) aus und ist nicht mit den Nachteilen des Standes der Technik aufgrund der endlichen Anzahl der Sensoren und der damit verbundenen Grenze der Auflösung behaftet. Die Genauigkeit der Messung hängt vielmehr wesentlich von der Auflösung des Sensors ab. Dabei kann die Auflösung insofern erhöht werden, wenn die Messrolle mit mehreren Messbalken bzw. Teil-Messbalken über die Bandbreite ausgerüstet ist. Denn diese Teil-Messbalken decken jeweils einen Teilbereich der Messrolle ab.

So reduziert sich bei beispielsweise drei Teil-Messbalken die Maximalkraft pro Messbalken auf 1/3 der gesamten Bandzugkraft. Auf diese Weise kann damit einhergehend natürlich auch die Messgenauigkeit um den Faktor 3 gesteigert werden.

Schließlich lässt sich die Auflösung auch dadurch erhöhen, dass der Messbalken besonders schmal ausgeführt wird und so schräg angeordnet ist, dass im Rahmen des Umschlingungswinkels des Bandes bzw. Metallbandes um die Messrolle nur jeweils ein einzelner Teil des Messbalkens erfasst wird. Dann wird aus diesen ermittelten gleitenden Mittelwerten unmittelbar die jeweilige Zugspannungsverteilungsfunktion abgeleitet.

Eine besonders schmale und massearme Ausgestaltung des oder der in die Messrolle integrierten (Teil)Messbalken empfiehlt sich auch vor dem Hintergrund, dass hierdurch Messfehler oder Verfälschungen verhindert werden, weil insofern auf den Messbalken einwirkende Zentrifugalkräfte beim Abrollen am Metallband keine oder nur eine vernachlässigbare Rolle spielen.

Im Ergebnis wird eine Messrolle zur Planheitsmessung von Bändern vorgestellt, die durch besonders einfachen Aufbau besticht. Verfahrenstechnisch ist dies auf die gewonnene Summenkraftfunktion und die daraus abgeleitete Zugspannungsverteilungsfunktion zurückzuführen.

Im Folgenden wird die Erfindung anhand einer lediglich ein Ausführungsbeispiel darstellenden Zeichnung näher erläutert; es zeigen:

Fig. 1a und 1b    die erfindungsgemäße Messrolle zur Planheitsmessung in perspektivischer Ansicht (Fig. 1a) und in schematischer Seitenansicht (Fig. 1 b),

Fig. 2    eine schematische Aufsicht auf den Gegenstand nach Fig. 1, reduziert auf die wesentlichen Bestandteile, in einer nicht von der Erfindung erfassten Ausführungsform.

Fig. 3    das Metallband zu verschiedenen Zeitpunkten während und vor einem Messvorgang,

Fig. 4    ein aus der Vorgehensweise nach Fig. 3 resultierendes Diagramm, welches die ermittelte Zugkraft $F_x$ über die Bandbreite B bzw. y zeigt,

Fig. 5    die erfasste Summenkraftfunktion F (y) bei einem planen und einem welligen Band,

Fig. 6    die Zugkraft dF/dy als Ableitung der Summenkraftfunktion F nach der Bandbreite y,

Fig. 7    die Zugspannungsverteilungsfunktion $\sigma_x$ (y), wie sie sich aus der Fig. 6 ergibt,

Fig. 8 und 9    Varianten der erfindungsgemäßen Messrolle,

Fig. 10a    ausschnittsweise eine Messrolle mit integriertem Messbalken in vertikaler Projektion,

Fig. 10b    den Gegenstand nach Fig. 10a in Seitenansicht,

Fig. 11    den Gegenstand nach Fig. 10b in perspektivischer Darstellung und

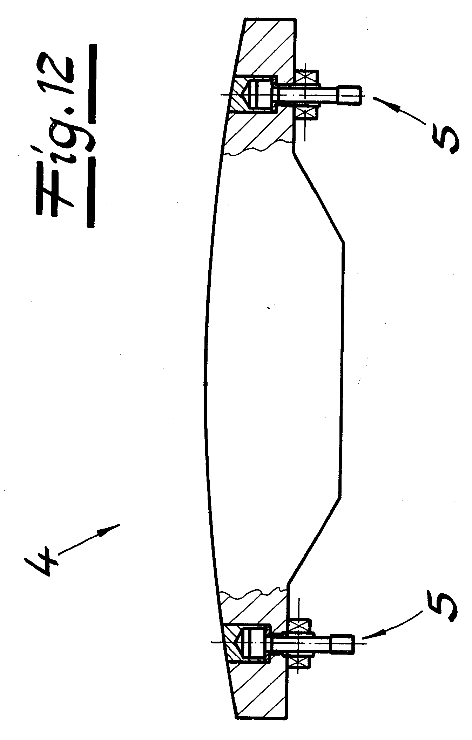

Fig. 12    einen Messbalken mit Kraftmessdosen in Seitenansicht.

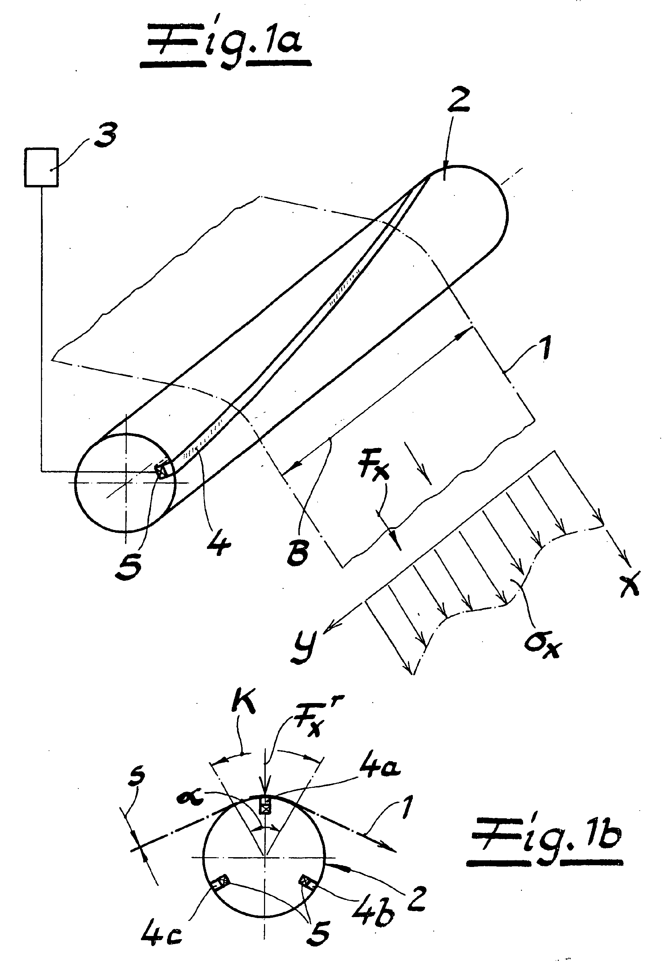

In den Figuren ist eine Vorrichtung zur Planheitsmessung von Bändern 1, nach dem Ausführungsbeispiel von Metallbändern 1, dargestellt. Im Rahmen der Fig. 1 erkennt man einen Teil des Metallbandes 1 beim Durchlaufen einer Bandprozesslinie, innerhalb derer das Band bzw. Metallband 1 beispielsweise gewalzt, geglüht oder vergleichbaren Bandbehandlungsprozessen unterworfen wird.

Zum grundsätzlichen Aufbau der Vorrichtung gehört eine sich wenigstens über die Bandbreite B erstreckende Messrolle 2. Tatsächlich ist die Länge L dieser Messrolle 2 so gewählt, dass gilt:

$$L \geq B.$$

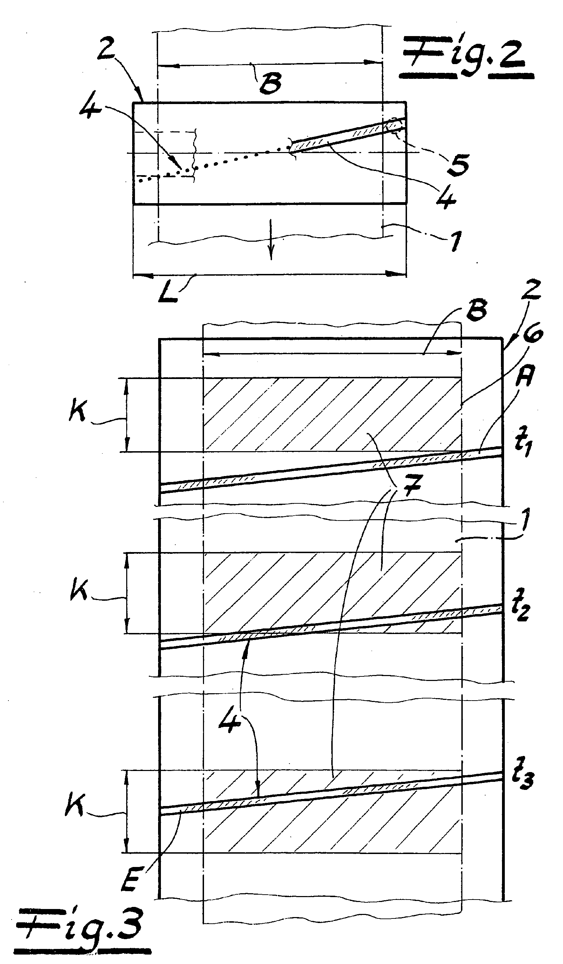

Das macht die Fig. 2 unmittelbar deutlich, welche das Metallband 1 nach Fig. 1 in Aufsicht und schematisch mit der zugehörigen Messrolle 2 zeigt. Hier erkennt man auch, dass zu der Bandbreite B die Bandbreitenkoordinate y gehört, während die Bandlaufrichtung in X-Richtung erfolgt. Zum grundsätzlichen Aufbau gehört schließlich eine nur angedeutete Rechnereinheit 3, welche die von der Messrolle 2 gelieferten und an dieser Stelle gemessenen Zugkräfte $F_x$ erfasst und weiterverarbeitet. Diese Zugkräfte bzw. Teilzugkräfte $F_x$ wirken im Rahmen des Ausführungsbeispiels in X-Richtung.

Die Messrolle 2 verfügt in ihrem Innern über einen integrierten Messbalken 4. Dieser Messbalken 4 kann sich über die gesamte Länge L der Messrolle 2 regelmäßig wendelförmig oder schräg erstrecken, wie dies in Fig. 1a angedeutet ist. Der Messbalken 4 ist in diesem Zusammenhang jeweils endseitig auf zwei Kraftmessdosen 5 oder vergleichbaren Kraftmesseinrichtungen aufgelagert, die im Wesentlichen radial auf den Messbalken 4 einwirkende Kräfte erfassen und in von der Rechnereinheit 3 verarbeitbare elektrische Signale umwandeln.

Die Messrolle 2 dient nun dazu, die Planheit des Bandes bzw. Metallbandes 1 zu erfassen. Dabei macht sich die Erfindung zu Nutze, dass bei einer Zugbeaufschlagung des Metallbandes 1 in X-Richtung, welche so groß ist, dass alle infinitesimalen Bandstreifen stramm sind, aus Welligkeiten resultierende Längenunterschiede Δ I der einzelnen Bandstreifen zu Dehnungsunterschieden (in Bandlaufrichtung x)

$$\Delta \varepsilon_x = \frac{\Delta \ell}{\ell}$$

korrespondieren. Daraus resultieren Zugspannungsunterschiede (in X-Richtung)

$$\Delta\sigma_x = \frac{\frac{\Delta\ell}{\ell}}{\phantom{.}} \cdot E = \frac{\Delta F_x}{B \cdot s} \, ,$$

mit E dem Elastizitätsmodul des Bandmaterials, $F_x$ der Zugkraft in X-Richtung, B der Bandbreite und s der Banddicke.

Aus der letztgenannten Beziehung folgt, dass Änderungen der Zugspannung $\Delta\sigma_x$ durch Messung der Zugkraft $F_x$ hergeleitet werden können (wenn man die Zugkraft $F_x$ noch durch die Bandbreite B und die Banddicke s dividiert). Diese Kraft $F_x$ bzw. Änderungen dieser Kraft $\Delta F_x$ werden mit Hilfe der Messrolle 2 ermittelt. Dabei wird die entsprechende Zugkraft $F_x$ in Bandlaufrichtung x nicht direkt gemessen, sondern vielmehr deren radiale Komponente $F_x^r$, welche aus der Umschlingung des Bandes 1 um die Messrolle 2 resultiert (vgl. Fig. 1 b).

Anhand der Fig. 2 und 3 erkennt man, dass der Messbalken 4 im Vergleich zur Bandlaufrichtung x schräg angeordnet ist. Auf diese Weise können im Vergleich zum Stand der Technik, beispielsweise nach der DE 199 18 699 A1, die am Band 1 jeweils angreifenden Zugkräfte $F_x$ nicht nur sektionsweise über die Bandbreite B bzw. y ermittelt werden, sondern gleichsam kontinuierlich.

Zu diesem Zweck erfasst die Messrolle 2 die Zugkräfte $F_x$ mit jeweils zeitlichem Versatz, wie dies in der Fig. 3 dargestellt ist. Dieser zeitliche Versatz wird anhand dreier verschiedener Zeitpunkte $t_1$, $t_2$ und $t_3$ deutlich, die zu verschiedenen Drehwinkeln der Messrolle 2 beim Anliegen am durchlaufenden Band 1 korrespondieren.

Zum Zeitpunkt $t_1$ hat ein Anfangspunkt bzw. Anfangsbereich A der Messrolle 2 bzw. des Messbalkens 4 eine Bandkante 6 des Bandes 1 innerhalb der sogenannten Kontaktlänge K erreicht. Diese Kontaktlänge K definiert eine Kontaktfläche 7 der Größe K · B (vgl. Fig. 3), welche der Fläche entspricht, innerhalb derer ein Kontakt zwischen dem Messbalken 4 und dem Band 1 besteht. Zu der Kontaktlänge K korrespondiert ein Umschlingungswinkel $\alpha$ (vgl. Fig. 1b).

Sobald der Anfangspunkt bzw. Anfangsbereich A des Messbalkens 4 die Bandkante 6 erreicht hat, registrieren die Kraftmessdosen 5 ein Signal aufgrund der nun am Messbalken 4 angreifenden radialen Komponente $F_x^r$ der Zugkraft $F_x$. Wenn nun das Band 1 in Bandlaufrichtung x weiterbewegt wird und sich die Messrolle 2 hierbei am Band 1 abrollt, bewegt sich der Messbalken 4 in seiner schrägen Anordnung sukzessive über die gesamte Kontaktfläche bzw. Messfläche 7 hinweg.

Das kommt zum Zeitpunkt $t_2$ zum Ausdruck. Da bei dieser Bewegung der Messbalken 4 mehr und mehr in die Kontaktfläche bzw. Messfläche 7 eintaucht, steigt auch die an den Kraftmessdosen 5 gemessene Zugkraft $F_x$. Das pflanzt sich so lange fort, bis ein Endpunkt bzw.

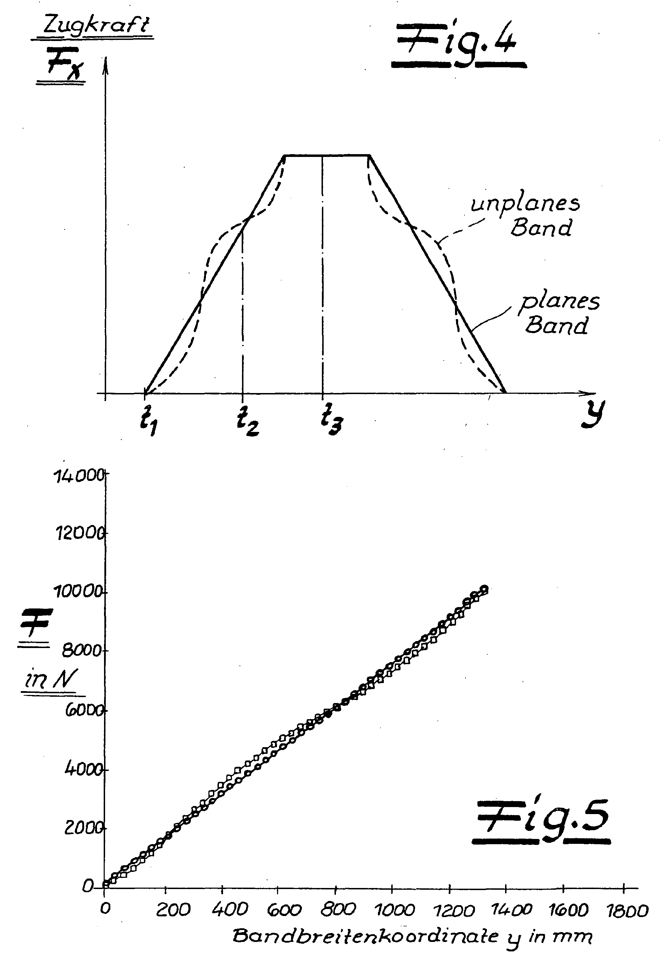

Endbereich E des Messbalkens 4 bzw. der Messrolle 2 die Kontaktfläche 7 verlassen hat, was im Anschluss an die Situation nach der Fig. 3 erfolgt. Zuvor erreicht die gemessene Zugkraft $F_x$ nach einem Anstieg eine Art Plateauniveau, wenn nämlich der Messbalken 4 voll innerhalb der Kontaktfläche bzw. Messfläche 7 angeordnet ist und fällt dann wieder auf Null zurück, wenn sich der Messbalken 4 aus der Kontaktfläche 7 herausbewegt. Dieser Verlauf ist in Fig. 4 schematisch dargestellt.

Nun ist es so, dass bei einem exakt planen Band 1 die Zugkraft $F_x$ linear ansteigt, weil hier Dehnungsunterschiede nicht vorliegen, also der Koeffizient $\frac{\Delta\ell}{\ell}$ den Wert Null annimmt. Aus diesem Grund ergeben sich auch keine Unterschiede $\Delta F_x$ in der Zugkraft $F_x$. Dagegen führt ein welliges Band 1 zu Schwankungen in der Zugkraft $F_x$, wie dies für ein unplanes Band in Fig. 4 ebenfalls angedeutet ist.

Dieser Unterschied wird auch bei Betrachtung der Fig. 5 deutlich, welche ein planes Band (Punkte) mit einem welligen Band (Quadrate) vergleicht, und zwar anhand einer Koordinatendarstellung der aus den einzelnen Zugkräften $F_x$ gewonnenen Summenkraftfunktion F in Abhängigkeit von der Bandbreite bzw. Bandbreitenkoordinate y.

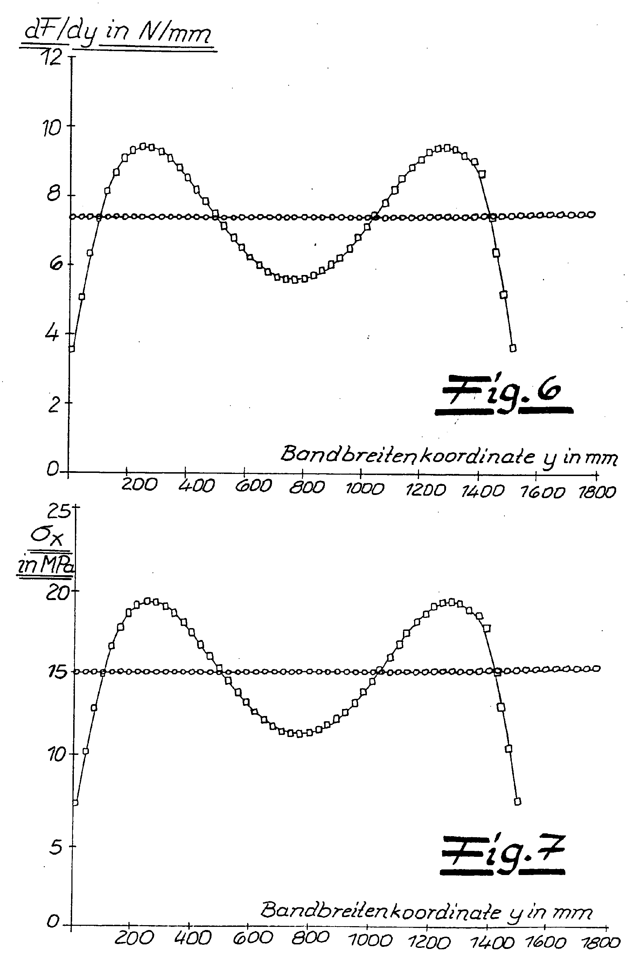

Leitet man nun diese Summenkraftfunktion F(y) nach der Bandbreitenkoordinate y ab, d. h. bildet man den Differentialkoeffizienten dF/dy, so kommt man auf die Zugkraftverteilung gegenüber der Bandbreitenkoordinate y, wie sie in Fig. 6 dargestellt ist. Auch in diesem Fall bezieht sich die Kurve mit Punkten wiederum auf ein planes Band, während ein welliges Band durch Quadrate charakterisiert wird. Dividiert man nun diesen Differentialkoeffizienten dF/dy durch die Banddicke s, so gelangt man unmittelbar zur Zugspannungsverteilungsfunktion $\sigma_x$ (y) gegenüber der Bandbreite bzw. Bandbreitenkoordinate y nach der Fig. 7. Die Fig. 6 und 7 zeigen dabei jeweils einen Ausschnitt aus Fig. 4, nämlich die ansteigende Flanke vor dem Plateau. Selbstverständlich kann alternativ oder ergänzend auch die abfallende Flanke ausgewertet werden.

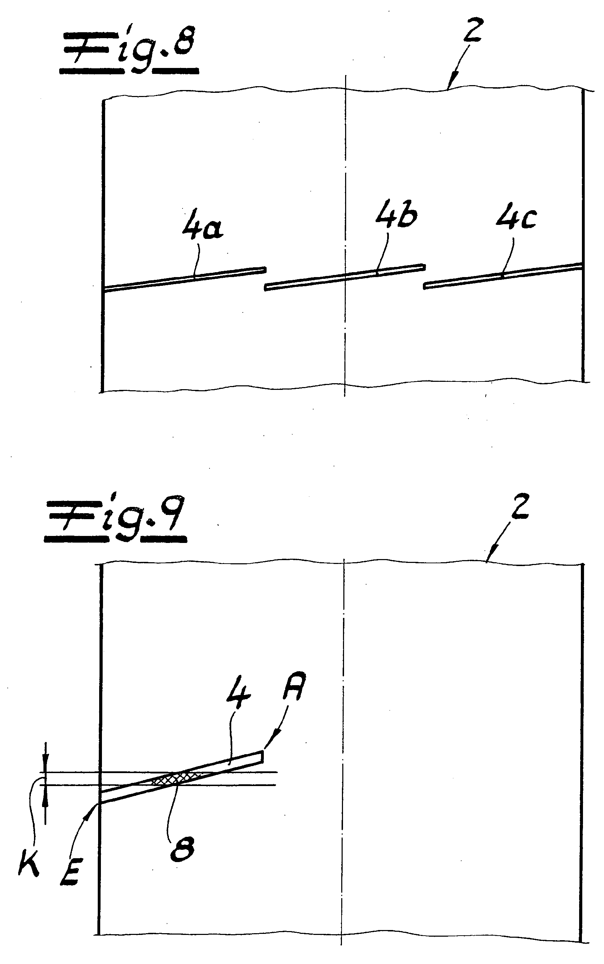

Anhand der Fig. 8 erkennt man, dass die Messrolle 2 in Längsrichtung mehrere Teilmessbalken 4a, 4b und 4c im Rahmen einer Variante aufweisen kann. Auf diese Weise lässt sich die Messrolle 2 in mehrere, vorliegend drei, longitudinale Messzonen unterteilen. Dadurch kann die Auflösung vergrößert werden, weil die auf den jeweiligen Teilmessbalken 4a, 4b, 4c maximal einwirkende Zugkraft $F_x$ nur noch einem Drittel der gesamten Bandzugkraft entspricht und folglich die Messgenauigkeit entsprechend gesteigert werden kann.

Lediglich in Fig. 1b angedeutet ist die weitere Option, die Messrolle 2 umfangseitig mit mehreren Teilmessbalken 4 auszurüsten. Dargestellt sind insgesamt drei über den Umfang verteilt angeordnete Teilmessbalken 4a, 4b, 4c die mit jeweiligen Kraftmessdosen 5 zusammenwirken. Auf diese Weise kann pro Umdrehung der Messrolle 2 eine Mehrzahl von Planheitsmessungen durchgeführt werden.

Schließlich macht die Fig. 9 deutlich, dass der Messbalken 4 so schmal ausgeführt werden kann und sich so schräg anordnen lässt, dass während einer Messung der Messbalken 4 mit seinem Anfang bzw. Anfangsbereich A und seinem Ende bzw. Endbereich E nicht mehr vollständig innerhalb des Umschlingungswinkels $\alpha$ angeordnet ist bzw. in diesen eintaucht, wie dies im Rahmen der bisher beschriebenen Vorgehensweise verfolgt wird. Vielmehr nimmt die Kontaktlänge K und damit die Kontaktfläche bzw. Messfläche 7 eine Größe an, welche beim Durchlauf des Bandes 1 den Messbalken 4 nur noch teilweise - und nicht mehr vollständig - beaufschlagt.

Das hat zur Folge, dass die in Fig. 9 markierte und für die Messung der Zugkraft $F_x$ verantwortliche Berührungsfläche 8 größtenteils konstant bleibt und nur zu Anfang und zu Ende eine Abweichung erfährt. Daraus resultiert ein jeweiliger Wert für die Zugkraft $F_x$, der gleichsam einem gemessenen gleitenden Mittelwert über die Bandbreite B bzw. y entspricht.

Schwankungen der Zugkraft $F_x$ lassen sich bei dieser Methode unmittelbar in die zugehörige Zugspannung bzw. die hieraus resultierende Zugspannungsverteilungsfunktion $\sigma_x(y)$ umdeuten. Denn Schwankungen der Zugkraft $\Delta F_x$ führen bei angenommener Änderung dA der Berührungsfläche 8 unmittelbar auf Variationen der Zugspannung $\Delta \sigma_x(y)$. Daraus ergibt sich über die Bandbreite y die gewünschte Zugspannungsverteilungsfunktion $\sigma_x(y)$. So oder so steht am Ende der beschriebenen Planheitsmessungen als Ergebnis die betreffende Zugspannungsverteilungsfunktion $\sigma_x(y)$ im Band 1, deren schematisches Aussehen in Fig. 1 angedeutet wurde.

Es versteht sich, dass die Messrolle 2 insgesamt mit einer Ummantelung aus beispielsweise Wolframcarbid oder einer Hartchromschicht versehen ist. Sie kann eine zylindrische Gestalt aufweisen, was jedoch nicht zwingend ist. Ebenso ist es denkbar, die Messrolle 2 mit Kühlmittelzuführungen auszurüsten, durch welche ein Kühlmittel eingeleitet wird, um die Planheitsmessungen möglichst genau zu gestalten und Temperatureffekte zu eliminieren. Auch stellt das eingeleitete Kühlmittel sicher, dass die eingesetzten Kraftmessdosen 5 keine temperaturbedingten Beschädigungen erleiden. Das gilt insbesondere für den Fall, dass nach dem beschriebenen Verfahren in einem Warmwalzwerk gearbeitet werden soll.

Schließlich ist es denkbar und wird vom Erfindungsgedanken umfasst, die Messrolle 2 mit einem oder mehreren Temperaturfühlern auszurüsten. Auf diese Weise kann nicht nur die Temperatur des durchlaufenden Bandes bzw. Metallbandes 1 ermittelt und daran anschließend ein Temperaturprofil erstellt werden. Sondern diese Temperaturmessung gibt auch Aufschlüsse über den eventuellen Bedarf an Kühlmittel für die Messrolle 2, um die Temperatur im verträglichen Bereich zu halten bzw. Temperatureffekte während der Messung auf ein Minimum zu reduzieren.

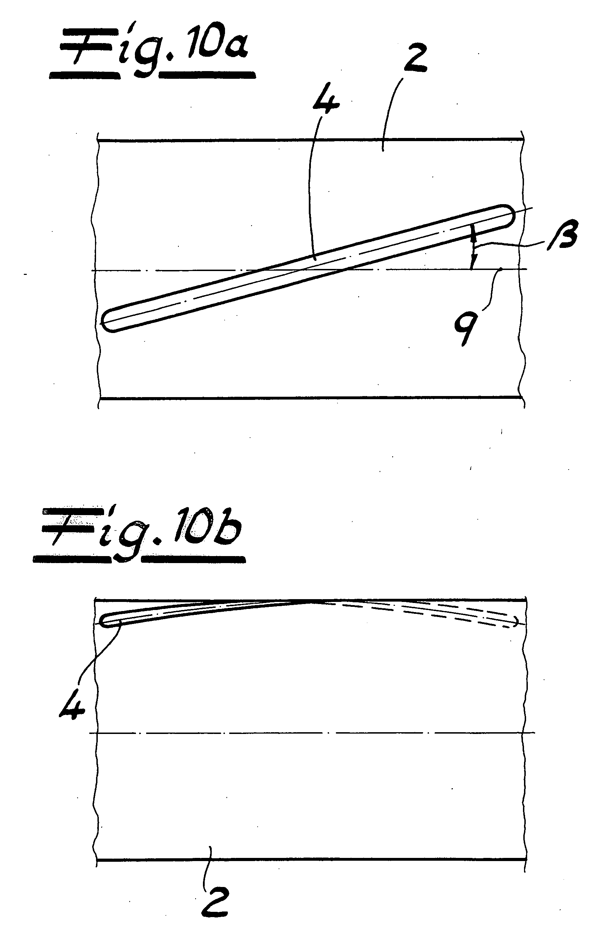

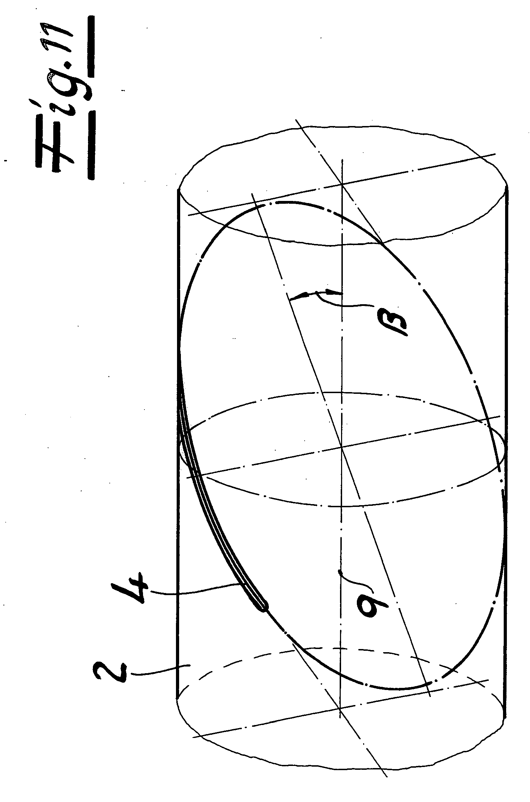

Wie insbesondere die Figuren 10 und 11 deutlich machen, verläuft der Messbalken 4 in vertikaler Projektion mit einem vorgegebenen Schrägwinkel $\beta$ zu der Hauptachse 9 der Messrolle 2. Dadurch bildet der Messbalken 4 praktisch einen ellipsenförmigen Bogen in der Oberfläche der Messrolle 2.

Es sollte abschließend betont werden, dass mit Hilfe des beschriebenen Verfahrens natürlich nicht nur Zugkräfte $F_x$ und Zugspannungsverteilungsfunktionen $\sigma_x(y)$ in Bandlängs- bzw. x-Richtung erfasst werden können. Sondern es ist genauso gut - alternativ oder zusätzlich - möglich, beispielsweise Zugkräfte in y-Richtung aufzubauen und auszuwerten.

**Patentansprüche**

1. Messrolle zur Planheitsmessung von in einer Bandlaufrichtung (x) bewegten Bändern (1), insbesondere von Metallbändern beim Durchlaufen von Bandprozesslinien oder Walzwerken, mit zumindest einem integrierten sich über die Rollenlänge (L) wendelförmig oder schräg, bezogen auf die Bandlaufrichtung (x), erstreckenden Messbalken (4) zum Ermitteln von auf das die Messrolle (2) teilweise umschlingende Band (1) einwirkenden Zugkräften, wobei der Messbalken (4) während der Zugkraftermittlung mit seinem Anfangsbereich (A) und seinem Endbereich (B) zumindest teilweise innerhalb des von dem Band (1) gebildeten Umschlingungswinkels ($\alpha$) angeordnet und jeweils endseitig auf Kraftmesseinrichtungen der Messrolle aufgelagert ist.

2. Messrolle nach Anspruch 1, wobei die Kraftmesseinrichtungen als Kraftmessdosen (5) ausgebildet sind.

3. Messrolle nach Anspruch 1 oder 2, wobei die Messrolle (2) in Längsrichtung mehrere Teilmessbalken (4a, 4b, 4c) aufweist, welche die Messrolle (2) in verschiedene longitudinale Messbereiche aufteilen.

4. Messrolle nach einem der Ansprüche 1 bis 3, wobei die Messrolle (2) umfangseitig mehrere Teilmessbalken (4a, 4b, 4c) aufweist, so dass pro Umdrehung eine Mehrzahl von Planheitsmessungen erfolgt.

5. Messrolle nach einem der Ansprüche 1 bis 4, wobei der Messbalken (4) in vertikaler Projektion mit einem vorgegebenen Schrägwinkel ($\beta$) zu der Hauptachse (9) der Messrolle (2) verläuft.

6. Messrolle nach einem der Ansprüche 1 bis 5 wobei die Messrolle (2) aus einzelnen Rollensegmenten aufgebaut ist.

**Claims**

1. A measuring roller for measuring the planarity of strips (1) transported in a strip transport direction (x), particularly of metal strips while they pass through strip processing lines or rolling mills, featuring at least one integrated measuring beam (4) that extends over the roller length (L) helically or obliquely referred to the strip transport direction (x) and serves for determining tensile loads acting upon the strip (1) being partially wrapped around the measuring roller (2), wherein the measuring beam (4) is during the tensile load measurement at least partially arranged within the wrap angle (α) formed by the strip (1) with its starting region (A) and its end region (B) and respectively supported on load measuring devices of the measuring roller on its ends.

2. The measuring roller according to claim 1, wherein the load measuring devices are realized in the form of load cells (5).

3. The measuring roller according to claim 1 or 2, wherein the measuring roller (2) features several partial measuring beams (4a, 4b, 4c) in the longitudinal direction and the measuring roller (2) is thereby divided into different longitudinal measuring zones.

4. The measuring roller according to one of claims 1-3, wherein the measuring roller (2) features several partial measuring beams (4a, 4b, 4c) on its circumference such that several planarity measurements are carried out per revolution.

5. The measuring roller according to one of claims 1-4, wherein the measuring beam (4) extends in a vertical projection obliquely to the principal axis (9) of the measuring roller (2) by a predefined angle (β).

6. The measuring roller according to one of claims 1-5, wherein the measuring roller (2) is composed of individual roller segments.

**Revendications**

1. Rouleau de mesure pour mesurer la planéité de bandes (1), en particulier de bandes métalliques, déplacées dans un sens de circulation de bandes (x), lors de leur passage dans des lignes de traitement de bandes ou des laminoirs, comportant au moins une barre de mesure (4) intégrée s'étendant en forme hélicoïdale ou à l'oblique par rapport au sens de circulation de la bande (x) sur la longueur du rouleau (L) pour déterminer des forces de traction agissant sur la bande (1) entourant partiellement le rouleau de mesure (2), la barre de mesure (4) étant, pendant la détermination de la force de traction, disposée par sa partie initiale (A) et sa partie terminale (B) au moins partiellement à l'intérieur de l'angle d'encerclement (α) décrit par la bande (1) et s'appuyant respectivement par son extrémité sur des dispositifs de mesure de force du rouleau de mesure.

2. Rouleau de mesure selon la revendication 1, les dispositifs de mesure de force se présentant sous forme de prises de mesure de force (5).

3. Rouleau de mesure selon la revendication 1 ou 2, le rouleau de mesure (2) présentant dans le sens longitudinal plusieurs sous-barres de mesure (4a, 4b, 4c) qui partagent le rouleau de mesure (2) en différentes zones de mesure longitudinales.

4. Rouleaux de mesure selon une des revendications 1 à 3, le rouleau de mesure (2) présentant au niveau de sa circonférence plusieurs sous-barres de mesure (4a, 4b, 4c), de sorte qu'il y a une pluralité de mesures de planéité par rotation.

5. Rouleau de mesure selon une des revendications 1 à 4, la barre de mesure (4) s'étendant en projection verticale avec un angle oblique prédéfini (ß) par rapport à l'axe principal (9) du rouleau de mesure (2).

6. Rouleau de mesure selon une des revendications 1 à 5, le rouleau de mesure (2) étant composé de segments de rouleau distincts.

EP 1 369 186 B1

# Fig.1a

# Fig.1b

8

Fig.2

Fig.3

Fig.4

Fig.5

Bandbreitenkoordinate y in mm

$\dfrac{dF/dy}{}\ in\ N/mm$

*Fig.6*

Bandbreitenkoordinate y in mm

$\dfrac{\sigma_x}{in\ MPa}$

*Fig.7*

Bandbreitenkoordinate y in mm

## Fig.8

2

4a      4b      4c

## Fig.9

2

4   A

K   E    8

EP 1 369 186 B1

# Fig. 10a

# Fig. 10b

13

_Fig.11_

EP 1 369 186 B1

*Fig.12*

4

5

5

EP 1 369 186 B1

**IN DER BESCHREIBUNG AUFGEFÜHRTE DOKUMENTE**

**In der Beschreibung aufgeführte Patentdokumente**

- EP 1116952 A2
- DE 19918699 A1
- EP 1182424 A1
- DE 1264100
- US 4445349 A

**In der Beschreibung aufgeführte Nicht-Patentliteratur**

- **GERT MÜCKE ; KAI F. KARHAUSEN ; PAUL-DI-ETER PÜTZ.** Formabweichungen in Bändern: Einteilung, Entstehung, Messung und Beseitigung sowie quantitative Bewertungsmethoden. *Stahl und Eisen,* 2002, vol. 122 (2), 33 ff